Europäisches Patentamt

(19) European Patent Office

Office européen des brevets

(11) Publication number: **0 069 357**

**A1**

(12) # EUROPEAN PATENT APPLICATION

(21) Application number: **82105889.8**

(22) Date of filing: **01.07.82**

(51) Int. Cl.³: **F 25 B 49/00**

(30) Priority: **08.07.81 IT 6794581**

(43) Date of publication of application:
**12.01.83 Bulletin 83/2**

(84) Designated Contracting States:
**DE FR GB NL SE**

(71) Applicant: **INDESIT INDUSTRIA ELETTRODOMESTICI ITALIANA S.p.A.**
**Str. Piossasco Km 17**
**I-10040 Rivalta Turin(IT)**

(72) Inventor: **Alluto, Luigi**
**Strada Santa Brigida 37/4**
**I-10024 Moncalieri (Torino)(IT)**

(74) Representative: **Prato, Roberto et al,**
**c/o Ingg. Carlo e Mario Torta Via Viotti 9**
**I-10121 Torino(IT)**

(54) Electronic circuit for the control of refrigerating apparatus.

(57) An electronic delay circuit is described, for refrigerator apparatus which has at least two cooling compartments at different temperatures, each of which is cooled by an evaporator traversed by the refrigerant fluid (one for fresh foods and one for frozen foods), a single compressor, a single condensor and a system of capillary tubes. The said electronic control circuit serves to inhibit attempts to restart the compressor, after it has stopped (for whatever reason) whilst the conditions remain non optimal. More particularly, it avoids attempts to restart the compressor whilst the pressures of the refrigerant fluid in the delivery and induction ducts of the compressor are not in equilibrium and/or if a PTC is used in the starter circuit of the electric motor, with the said PTC still hot. The said electronic control circuit even allows the requirement for a starter capacitor to be eliminated.

This delay is obtained by discharging a capacitor (which is charged during the operating time of the compressor) through a resistor: the charged condition of the capacitor after the compressor has stopped in fact prevents the commutation of a threshold voltage comparator circuit which is responsible for enabling a new start up of the motor of the compressor. The values of the said capacitor and of the charging and discharging resistors are chosen in such a way that the voltage across the said capacitor has substantially, instant by instant, the same variation as the pressure in the condenser of the refrigerator circuit.

FIG 1

- 1 -

## ELECTRONIC CIRCUIT FOR THE CONTROL OF REFRIGERATING APPARATUS.

The present invention relates to an electronic circuit for the control of refrigerating apparatus comprising at least two cooling compartments having different temperatures, each of which is cooled by an evaporator traversed by a refrigerant fluid and one of which is associated with fresh foods and one with frozen foods, a compressor for compressing the refrigerant fluid, a condenser for condensing the refrigerant fluid coming from the compressor, a system of capillary tubing for carrying the refrigerant fluid from the condenser to the evaporators, and in which the two cooling compartments operate substantially independently of one another.

Combined or two-door refrigerators with two cooling compartments, one for fresh foods and one for frozen foods, and a single compressor are known. It is also known that one of the characteristics most desired in this type of apparatus is independent operation of the two cooling compartments. One way of obtaining this object is by putting the evaporators of the two compartments in series or in parallel and by controlling them, by means of solenoid valves, in such a way that the refrigerant fluid circulates in both the evaporators or in only one of these depending on whether it is desired to cool both the compartments or only one of these. Independent control of the two compartments is obtained by means of independent thermostats one fitted in the frozen food compartment and one in the fresh food compartment.

In this way, therefore, both the cooling compartments,

- 2 -

independently from one another, can require the compressor to start or stop and this type of operation involves disadvantages in the functioning of the compressor. In fact it is possible that soon after one of the two compartments has reached the desired temperature, and therefore has made the compressor stop, the other compartment requires cooling and therefore would wish to make the compressor start up again. The said compressor, therefore, having just terminated one cycle, has refrigerant fluid at low pressure in the inlet duct and refrigerant fluid at high pressure in the output duct, and given that it is driven by a single phase electric induction motor which has a low starting torque, does not succeed in starting up again. Until now the problem has been resolved by mounting a starting capacitor in series with the starter winding, which by increasing the phase displacement between the currents which flow in the starter and main windings, increases the starting torque of the electric motor by 50-60% thereby allowing the compressor to start up.

But even this solution has its disadvantages, because the said capacitor is of the electrolytic type which involves significant tolerances, has poor reliability (in fact they can blow up rather easily) and finally the cost is not insignificant.

Moreover in motors the main winding of which is controlled by a resistor with a positive temperature coefficient ("PTC"), it is necessary to take account of another problem. When it is first supplied the current flows both in the main winding and in the starter wind-

- 3 -

ing, in series with which latter the positive temperature coefficient resistor "PTC" is located.  The current
by flowing in both the said windings, allows the
electric motor to start, but simultaneously heats
the "PTC" and this latter experiences a large increase
in its resistance and impedes the further passage of
current in the starter winding.  In this way, after
starting, the starter winding is effectively excluded
because of the continuous flow of current which
maintains the "PTC" hot.

If, however, soon after it has stopped the compressor
were to attempt    to restart again, the "PTC" would
still be hot and the starter circuit would remain always
open so that the compressor would not be able to start
up again.

The same disadvantage obtains if the compressor should
not succeed in starting since, in fact, in this case also, the "PTC" would be heated and subsequent attempts to
start would find the starter circuit always open.

Therefore, the object of the present invention is that
of overcoming the above mentioned disadvantages and of
providing an electronic circuit which functions, after
the compressor has stopped, to prevent it from restarting for a time such as to permit the equilibrium
conditions of pressure in the inlet and outlet ducts
of the compressor itself to be re-established, and to
allow the "PTC", if one is used, time to cool completely
in such a way that the starting torque of the electric
motor, with the pressures balanced, will be sufficient to start the compressor, and in the case
of starting with a "PTC", this latter───────────────

- 4 -

having had time to cool, allows the current to flow
in the starter winding.

Further objects of the present invention are those of
ensuring that the windings of the electric motor are
not subjected to current overloads, and therefore to
a high temperature, which could damage them, and to
ensure that this electronic circuit will be reliable
and of low cost.

To achieve these objects the subject of the present
invention is an electronic circuit for the control
of refrigerator apparatus comprising at least two
cooling compartments at different temperatures, each
of which is cooled by an evaporator traversed by a
refrigerant fluid and one of which is associated with
fresh food and one with frozen foods, a compressor for
compressing the refrigerant fluid, a condenser for
condensing the refrigerant fluid coming from the compressor, a system of capillary tubing for carrying
the refrigerant fluid from the condenser to the evaporators, and in which the operation of the two cooling compartments is substantially independent, characterised by the fact that for ensuring that after
the compressor has stopped a predetermined delay
occurs before the compressor is started up again,
the length of this delay being such as to allow the
equilibrium between the pressures of the refrigerant
fluid in the delivery duct and the intake duct of
the compressor itself to be re-established, there
are provided timer means of analogue type which
enables a switching circuit to maintain the drive
circuit of the compressor motor in an inhibited condition

- 5 -

for the duration of the predetermined delay.

Further objects and advantages of the present invention will become clearly apparent from the detailed description which follows and from the attached drawings given purely by way of explanatory and non limitative example, in which:

Figure 1 is a diagram of the electronic control circuit forming the subject of the present invention;

Figure 2 illustrates the driving arrangement for the electric motor of a compressor of a refrigerator, according to the invention;

Figure 3 illustrates the driving arrangement of an electric motor for a compressor, in a second embodiment of the present invention; and

Figure 4 illustrates the variation of the resistance of a resistor of the "PTC" type as a function of time in the cooling phase, such resistor being utilised in the embodiment illustrated in Figure 3.

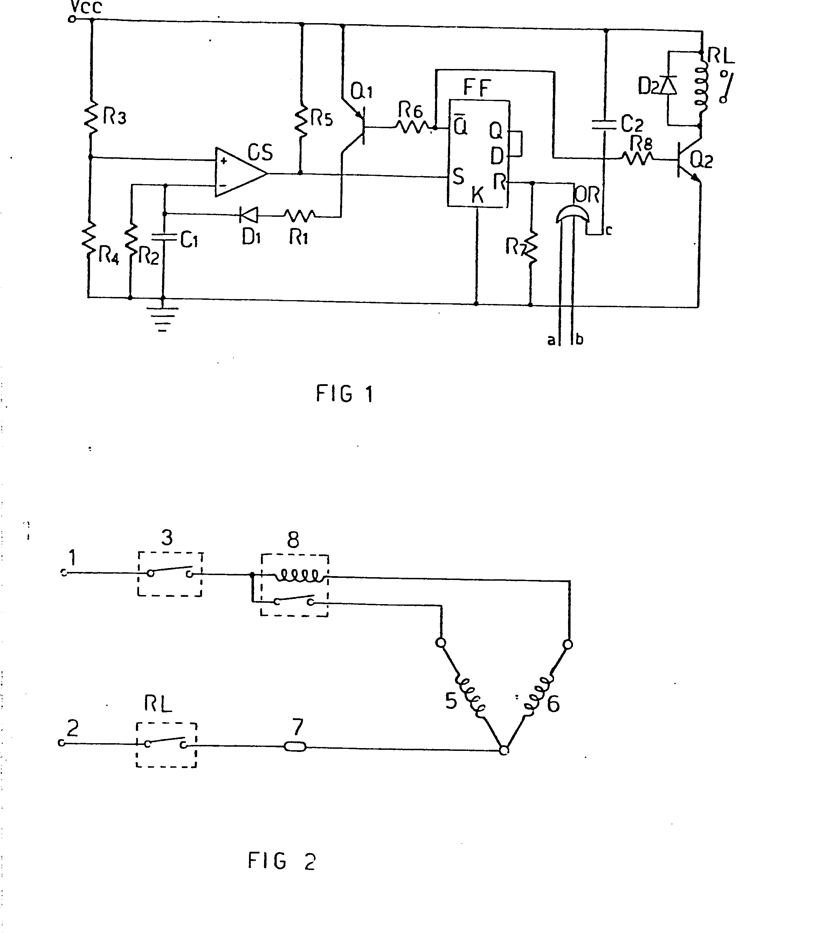

With reference to Figure 1 there can be seen: a positive supply terminal $V_{CC}$ to which is connected one terminal of a resistor $R_3$ the other terminal of which is connected to the non-inverting input of a threshold comparator CS and a terminal of a resistor $R_4$ the other terminal of which is earthed. To the inverting input of the threshold comparator CS there are connected one terminal of a resistor $R_2$, the other terminal of which is earthed, one terminal of a capacitor $C_1$ the

- 6 -

other terminal of which is earthed, and the cathode of a diode $D_1$ the anode of which is connected to one side of a resistor $R_1$. The other side of the resistor $R_1$ is connected to the collector of a PNP transistor $Q_1$ the emitter of which is connected to the supply $V_{CC}$, whilst the base is connected to one side of a resistor $R_6$ the other side of which is connected to the output $\bar{Q}$ of a flip flop of the set-reset type indicated FF.

The output of the threshold comparator CS is connected to one side of a resistor $R_5$ the other side of which is connected to the supply $V_{CC}$, and the set input of the flip flop FF.

To the output $\bar{Q}$ of the flip flop FF there is also connected one terminal of a resistor $R_8$ the other side of which is connected to the base of an NPN transistor $Q_2$. The emitter of the transistor $Q_2$ is connected to earth whilst the collector is connected to one side of a relay coil $R_L$ the other side of which is connected to the supply $V_{CC}$, and to the anode of the diode $D_2$ the cathode of which is also connected to the supply $V_{CC}$. To the reset input of the flip flop FF there are connected one terminal of a resistor $R_7$ the other terminal of which is earthed, and the output of an OR gate. To the "a" input of the OR gate there is supplied a positive signal for the whole of the time that, for any reason, the switch sensitive to the temperature and/or to the current of the refrigerator on which the electronic control circuit is fitted, interrupts the supply circuit of the electric motor, the input "b" receives a positive signal for the whole of the

- 7 -

time that the compressor of the refrigerator is stopped because it has finished a cooling cycle, whilst the input "c" is fed via a capacitor C2 which is connected between this input and the supply $V_{cc}$ to provide a positive signal whenever the refrigerator is plugged in to the mains.

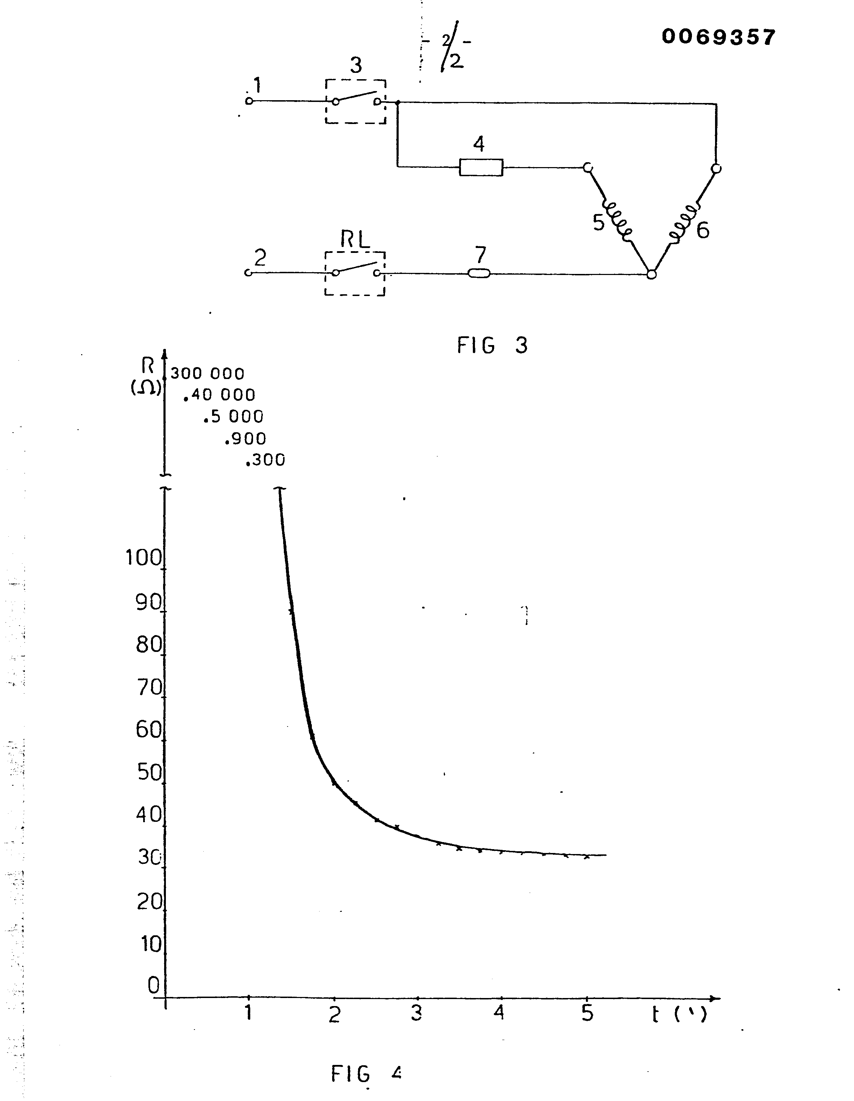

With reference to Figure 2 where the drive arrangement of the compressor motor of a refrigerator suitable to be associated with the electronic control circuit illustrated in Figure 1 is shown, there can be seen: a thermostat 3 (mechanical or electronic) of the refrigerator apparatus, which has one contact connected to the network supply terminal 1 and the other contact connected to one terminal of the excitation coil of a starter relay 8 and to a "normally open" contact of the same relay 8. The other terminal of the relay coil 8 is connected to one end of the main winding 6 of a single phase induction motor the other end of which is connected to one end of the starter winding 5 of the same electric motor and to one end of a switch 7 sensitive to current and temperature overloads, the other terminal of which is connected to one of the contacts of the relay RL which is the same as in the electronic control circuit shown in Figure 1, the other contact of which is connected to the other terminal of the network supply 2. The other end of the starter winding 5 is connected to the other contact of the starter relay 8.

For a good understanding of the operation of the electronic control circuit shown in Figure 1 it is necessary also to make reference to the drive arrange-

- 8 -

ment of Figure 2.

Starting from the condition that the compressor of the refrigerator apparatus on which the electronic control circuit is mounted is in operation. In these conditions the output $\bar{Q}$ of the flip flop FF is low, the transistor $Q_2$ is non-conducting the relay $R_L$ is not excited and given that it has normally closed contacts it allows the supply to pass to the compressor. The transistor $Q_1$ on the other hand conducts and the capacitor $C_1$ is charged through the resistor $R_1$ and the diode $D_1$ with a time constant $R_1 \times C_1$ (which in the illustrated embodiment is in the region of 0.18 seconds). When the compressor stops, (because it has terminated a cooling cycle), reset signal reaches the flip flop FF through the logic OR gate. The terminal $\bar{Q}$ becomes high, the transistor $Q_2$ conducts, the relay $R_L$ becomes excited and its contacts open preventing the compressor from restarting even if the thermostat should, immediately after a stop, arrive at a new request in this sense. Simultaneously the transistor $Q_1$ ceases to conduct and the capacitor $C_1$ starts to discharge through the resistor $R_2$ with a time constant $R_2 \times C_1$ (which in the embodiment illustrated is in the region of 50 seconds). The voltage at the inverting input of the threshold comparator CS starts to fall until after a time equal to about $5 \times R_2 \times C_1$ (in our case about 4 minutes) it reaches the voltage set on the non inverting terminal of the same comparator CS by the voltage divider $R_3$, $R_4$. At this point the output of the said threshold comparator CS becomes high and the flip flop FF is sent a set input which makes its output $\bar{Q}$ go low again turning off the trans-

- 9 -

istor $Q_2$. This causes closure of the contacts of the
relay $R_L$ consequently enabling the motor to start up
again if the thermostat circuit requires it.

In conclusion, from the moment that the flip flop FF
receives its reset signal (which opens the contacts
of the relay $R_L$) a time of at least about $5 \times R_2 \times C_1$
seconds must pass before the compressor is enabled
to start up again. This charging and discharging of
the capacitor $C_1$ (with the two different time con-
stants) simulates the variation of the pressure of
refrigerant fluid in the condenser of the refrigerator
apparatus, and therefore with a suitable choice of
the values of $R_2$ and $C_1$ a time delay $5 \times R_2 \times C_1$ which
corresponds to the time necessary to re-establish the
equilibrium between the pressures in the delivery
duct and the induction duct of the compressor can
be set. We have said that a reset at the flip flop FF
prevents the compressor from starting up again for a
time $5 \times R_2 \times C_1$ so that, to obtain further advantages,
it is arranged that such reset can also arrive from the
switch 7 sensitive to overloads in the temperature and/
or the current and from the network supply.

The continuous supply $V_{CC}$ is obtained by means of a
supply device connected to the mains such that each
time the apparatus is plugged in, a reset signal reaches the
flip flop FF through the capacitor $C_2$ and the OR gate.
This means that each time that the plug is inserted
into the main supply the electronic circuit, before
starting the compressor, checks that the capacitor
$C_1$ is discharged and this gives the advantage that
in the case of insertion, removal and re-insertion of the plug (a thing which quite often happens both because of erroneous actions by the user and because of faulty contact) the compressor will not find itself in the critical conditions described above of having to restart immediately after it has stopped. The reset signal which arrives from the switch 7 sensitive to overloads in temperature and/or current via the OR gate, when these are open, serves to ensure that even in the case of a faulty start or an accidental stop for mechanical or thermal reasons, the restarting of the compressor will be delayed by the time $5 \times R_2 \times C_1$, given that even in this case (without the delay time) the compressor would have to restart immediately after it has stopped.

Moreover, it also serves, in the case where a positive temperature coefficient resistor is used for starting the electric motor, to give this element time to cool completely, but to better understand the importance of this observation reference will be made to Figures 3 and 4.

In Figure 3, where the same components as in Figure 2 are indicated with the same reference numerals, there can be seen:

a mains supply terminal 1 connected to a thermostat contact 3 (mechanical or electronic) of the refrigerator apparatus. The other contact of the thermostat 3 is connected to one side of a resistor having a positive temperature coefficient (PCT) 4, the other terminal of which is connected to one end of the starter winding 5 of a single phase induction motor, and to one end of the main winding 6 of the same electric motor. The two other ends of the starter winding and the main winding are both connected to one end of a switch 7 sensitive to overloads in the temperature and/or currents, the other end of which is connected to one of the contacts of a relay which is the same as in the electronic delay circuit illustrated in Figure 1; the other contact, in turn, is connected to the other terminal of the mains supply 2.

Finally, in Figure 4 there is shown the variation of the resistance of the PCT as a function of cooling time; that is to say, the instant T=0 on the abcissa axis represents the moment when the compressor stops because it has finished a cooling cycle and therefore no more current passes in the PCT. As will be appreciated the graph has been truncated to facilitate the illustration, given that the beginning of the curve is shown to start only after more than a minute from the extinguishing time has passed. The numbers show the values which this resistance assumes in the preceding instants.

As already said, in Figure 2 there is shown an application of the electronic control circuit which solves all the operating problems of the compressor for this type of configuration of starter circuit for the electric motor.

This configuration also permits protection of the integrity of the electric motor to be obtained both in the case of high temperatures of the motor windings and of current overloads in these windings for a time greater than 0.5 seconds.

- 12 -

However, the said configuration has the disadvantage
that the starter relay 8 requires calibration for
each compressor used and, moreover, the cost of this
starter relay 8 is not insignificant. For this
reason the adoption of other starting solutions for
electric motors which drive compressors have entered
into use, which will obviate these disadvantages.
One of these uses a resistor with a positive temperature coefficient "PTC" in the starter circuit. The
PTC costs less than the relay and moreover works well
for all compressors, but also has various disadvantages.

In fact, in this case, it is common practice for the
switch 7 sensitive to overloads in the temperature and/
or currents, given that it is traversed only by the operating current, is connected within the motor; with
all the problems that this involves, that is to say
it must be hermetically sealed against the refrigerant
fluid, it must be mounted together with the motor, it
must be very reliable, etc.; and moreover this type
of switch also  has  to have dimensions less than
those used in the systems of Figure 2 and of the
bi-metal type and is primarily sensitive to  excess
temperature.

Consequently the system of protection is very slow,
in fact in the case of extended current overloads
(the electric motor is not started or is stopped for
some mechanical or thermal impediment) before the
said temperature-sensitive switch          opens the
circuit it is necessary to wait for the . main   winding of the motor to heat by the Joule effect until it
reaches a temperature of about $140^{\circ}$, and before the

circuit is closed again it is necessary to wait for the temperature of the said winding to fall below $100^{\circ}$. All these operations last for about ten minutes, and in the case of a faulty start when there is a need to cool a compartment of the refrigerator this delay is not acceptable.

To resolve the problems of reliability and slowness in the response it would therefore be useful to be able to use a switch of the very quick current sensitive type and to mount it externally of the hermetically sealed container of the electric motor.

This solution too, however, without the electronic control circuit, would not work well in the case of a faulty start because in this case the said current sensitve switch would open and close quickly but the PTC would not have time to cool so that successive attempts to restart the motor would not cause the current to circulate in the starter winding and the compressor would not be able to restart, and this situation would repeat ad infinitum given that the PTC, always being traversed by current, would remain hot preventing the compressor from restarting.

In conclusion, with a very quick current sensitive switch it is necessary to leave the PTC time to cool completely before making a new attempt to start the compressor.

By looking at Figure 4 , where the variation of the resistance of the PTC as a function of cooling time is plotted, we note how after three minutes the PTC can

- 14 -

be considered as practically cold.

To all the above described situations the configuration illustrated in Figure 3 responds, which
includes a PTC 4 in the starter circuit, a current
sensitive switch 7 mounted externally  of the casing
of the electric motor and an electronic control circuit
not  shown, but identical to that illustrated in
Figure 1 which controls the contacts of the relay $R_L$.
To understand the operation of the said system we
start from the condition in which the compressor is
operating.  In this condition both the contacts of
the thermostat 3 and those of the relay $R_1$ are
closed.  If the compressor stops because it has
finished a cooling cycle the operation is identical
to that illustrated with reference to Figure 1.  If,
on the other hand, the compressor stops accidentally,
or else because of a faulty compressor start, the
current overload in the windings of the electric
motor causes the switch 7 to open which, through
the OR gate, sends the reset signal to the flip
flop FF.

From this instant, and for a time of $5xR_2xC_1$ seconds
the contacts with the relay $R_2$ remain open preventing
any attempt to restart the compressor and giving the
PTC 4 time to cool completely in such a way that upon
a subsequent attempt, finding it cold, the current
circulates in the starter winding allowing the compressor to start up again.

In conclusion, the electronic control circuit gives
time not only for the pressure of the refrigerant

- 15 -

fluid in the delivery and induction ducts of the compressor to regain their equilibrium state, but also gives the PTC time to cool completely so that after a stop or a false start both the pressures and the PTC will be in the best condition for allowing a correct restarting of the compressor.

From the above description the advantages of the electronic delay circuit constituting the subject of the present invention will be clearly apparent. In particular these include the possibility of making the pressures of the refrigerant fluid regain equilibrium between the delivery and induction ducts of the compressor after it has stopped and before a new start, allowing the use of a starter capacitor to be avoided, the possibility of being able to utilise a PTC in the starter circuit of the electric motor and a switch sensitive to excess temperature and/or to current overload mounted externally of the hermetically sealed container of the electric motor itself with signficiant savings both in the cost of the components and in the labour involved, and the simplicity and reliability of the electronic circuit itself and its low cost.

It is clear that numerous variations of the electronic control circuit described are possible as well as in the systems for its application, such as for example a current overload sensor positioned externally of the hermetically sealed motor container which whenever there is a current overload for a certain time (for example 0.5 seconds) sends a positive signal to the OR gate of the electronic control circuit, and which

- 16 -

together with an additional excess temperature sensor positioned in thermal contact with the winding of the motor allows the elimination of the switch sensitive to excess temperature and/or current overloads, or a different manner of obtaining the delay or equivalent circuit solutions without by this departing from the scope of the principles of novelty inherent in the inventive idea.

Dr. Ing. Roberto PRATO

- 17 -

CLAIMS

1.     An electronic circuit for the control of refrigerating apparatus comprising at least two cooling compartments at different temperatures, each of which is cooled by an evaporator traversed by a refrigerant fluid and one of which is associated with the fresh food compartment and one with the frozen food compartment, a compressor for compressing the refrigerant fluid, a condenser for condensing the refrigerant fluid coming from the compressor, a capillary tubing system for carrying the refrigerant fluid from the condenser to the evaporators and having a substantially independent operation of the two cooling compartments, characterised by the fact that in order to ensure a predetermined delay after the compressor has stopped before it is restarted, of a time period such as to allow the re-establishment of the pressure equilibrium of the refrigerant fluid in the delivery and induction ducts of the said compressor there are provided timer means of analogue type which enables a switching circuit to maintain the drive circuit of the motor of the compressor in an inhibited condition for the duration of the said predetermined delay.

2.     An electronic circuit for the control of refrigerating apparatus, according to Claim 1, characterised by the fact that the said timer means act via the discharge of an element capable of accumulating energy, which is charged during the normal operation of the compressor, into an element capable of dissipating energy.

- 18 -

3. An electronic circuit for the control of refrigerating apparatus according to Claim 2, characterised by the fact that the said electrical energy accumulation element is a capacitor $(C_1)$, and in that the said electrical energy dissipating element is a first resistor $(R_2)$.

4. An electronic circuit for the control of refrigerating apparatus, according to Claim 3, characterised by the fact that the said capacitor $(C_1)$ is charged through a second resistor $(R_1)$, and in that the values of the said elements and of the said second resistor $(R_1, C_1, R_2)$ are chosen in such a way that the variation of the voltage across the capacitor substantially represents, instant by instant, the variation of the pressure of the refrigerant fluid in the condenser of the refrigerating apparatus.

5. An electronic circuit for the control of refrigerating apparatus, according to Claim 2, characterised by the fact that the said switching circuit receives, at each stop of the compressor, a signal at one of its inputs which puts it into a condition which produces inhibition to restarting of the compressor until the other of its inputs receives a signal indicating the occurrence of discharge of the said element capable of storing energy which puts it into a condition which permits restarting of the compressor to be enabled.

6. An electronic circuit for the control of refrigerating apparatus, according to Claim 5, characterised by the fact that the said switching circuit includes a threshold voltage comparator circuit (CS)
which receives at its non-inverting input a reference
voltage derived from a divider circuit formed by
two further resistors $(R_3, R_4)$ and at its inverting
input the voltage which exists across the terminals
of the said element capable of storing energy.

7.    An electronic circuit for the control of refrigerating apparatus, according to Claims 5 and 6,
characterised by the fact that the said switching
circuit also includes a flip flop of the set-reset
type (FF) to the set input of which there is connected the output of the said threshold voltage
comparator (CS).

8.    An electronic circuit for the control of refrigerating apparatus, according to Claim 5, characterised by the fact that it includes a logic OR
gate which sends a signal to the input of the said
switching circuit when it receives a signal at one
or the other of its inputs.

9.    An electronic circuit for the control of refrigerating apparatus according to Claim 8, characterised by the fact that it includes a capacitor $(C_2)$
which, each time a voltage is supplied to the electronic circuit, sends a signal to one of the inputs
of the said logic OR gate in such a way that in the
event of faulty contacts in the supply circuit, or
of insertion, removal and reinsertion by the operator of the plug of the apparatus into the electrical
supply socket, delays the starting of the compressor
to avoid repeated fruitless attempts to start.

- 20 -

10.    An electronic circuit for the control of refrigerating apparatus, according to Claim 8, characterised by the fact that it includes a switch (7)
sensitive to excess temperature and/or to current
overloads which while it is operating, opening its
contacts, sends a signal to one of the inputs of the
said logic OR gate enabling the delay operation in
the event of false starts or of stoppage of the
electric motor of the compressor from mechanical
and/or thermal causes.

11.    An electronic circuit for the control of refrigerating apparatus, according to Claim 8, characterised by the fact that it includes a current sensor
in series with the windings of the electric motor,
which, whenever there is a current overload lasting
for about 0.5 seconds sends a signal to one of the
inputs of the said logic OR gate thereby enabling the
delay function.

12.    An electronic circuit for the control of refrigerating apparatus, according to Claim 10 and Claim 11,
characterised by the fact that it includes a temperature sensor positioned in thermal contact with the
said windings of the electric motor, which together
with the said current sensor in series with the said
windings allows the elimination of the said switch (7)
sensitive to excess temperature and/or excess current.

13.    An electronic circuit for the control of refrigerating apparatus, according to Claim 1, characterised by the fact that it includes a switch element in
the supply circuit of the electric motor for driving the compressor of the refrigerator apparatus itself,
controlled from the output of the said switching
circuit.

14.    An electronic circuit for the control of refrigerator apparatus, according to Claim 13, characterised by the fact that the said switch element
is a relay $(R_L)$.

15.    An electronic circuit for the control of refrigerator apparatus, according to Claims 2 and 13,
characterised by the fact that the opening time of the
contacts of the said switch element is determined by
the discharge time of the said element capable of
storing energy through the said element capable of
dissipating it.

16.    An electronic circuit for the control of refrigerating apparatus, according to Claim 15, characterised by the fact that the said opening time of the said con-
tacts of the switch element and the said discharge
time of the said element capable of storing energy
through the said element capable of dissipating it
are substantially equal.

17.    An electronic circuit for the control of refrigerating apparatus, according to Claims 7 and 14,
characterised by the fact that the said relay $(R_L)$
is controlled from the output of the said flip flop
(FF) through a switching transistor $(Q_2)$.

18.    An electronic circuit for the control of refrigerating apparatus, according to Claim 1, character-

- 22 -

ised by the fact that the electric motor for driving the compressor of the refrigerating apparatus has a starter winding (5) controlled through a PTC (4) , and by the fact that a switch (7) sensitive to excess temperature and/or to excess current is positioned externally of the hermetically sealed casing containing the motor itself and sends a delay request signal to the said switching circuit in the presence of an excess temperature and/or of an excess current.

19. An electronic circuit for the control of refrigerating apparatus, according to Claims 8 and 18, characterised by the fact that the said switch (7) sensitive to excess temperature and/or to excess current opens its contacts when it operates, thereby interrupting the supply to the said electric motor.

Dr. Ing. Roberto PRATO

FIG 1

FIG 2

0069357

FIG 3

FIG 4

## European Patent Office

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X,Y | US-A-3 864 611 (T. CHANG)<br><br>* Abstract; column 4, line 30 - column 5, line 47; column 8, line 50 - column 9, line 3; column 13, lines 7-17; figures 1-5 * | 1-5,10 ,13-15 | F 25 B 49/00 |
| Y | US-A-4 142 375 (Y. ABE)<br><br>* Abstract; column 7, line 53 - column 8, line 68; figures 1,5 * | 1,7,14 ,17 | |
| A | FR-A-2 208 101 (BOSCH)<br>* Page 1, lines 20-35; page 3, line 9 - page 4, line 7; figure 1 * | 10,12 | |
| A | US-A-4 253 130 (D. NEWELL)<br>* Abstract; column 8, line 47 - column 9, line 32; figure 5 * | 1,5,8 | TECHNICAL FIELDS SEARCHED (Int. Cl. ³)<br><br>F 25 B<br>G 05 D |
| A | US-A-3 695 054 (V. BARRY)<br>* Column 3, lines 37-45; figure 2 * | 1,18 | |
| A | US-A-4 132 085 (K. MAIO)<br>* Column 2, lines 42-54; column 5, lines 43-66; figure 1 * | 11 | |

The present search report has been drawn up for all claims

| Place of search<br>THE HAGUE | Date of completion of the search<br>26-10-1982 | Examiner<br>HELOT H.V. |
|---|---|---|